# EUROPEAN PATENT APPLICATION

(11) **EP 1 133 189 A2**
(43) Date of publication of application: **12.09.2001**
(21) Application number: 01105788.2
(22) Date of filing: 08.03.2001
(51) Int. Cl.: H04N 7/24

(54) **Transmission system, reception system, and transmission and reception system capable of displaying a scene with high quality**

(30) Priority: 09.03.2000 JP 2000064627; 09.03.2000 JP 2000064628; 01.08.2000 JP 2000233083
(71) Applicant: Sanyo Electric Co., Ltd., Moriguchi-shi, Osaka (JP)
(72) Inventor: Okura, Hirotsugu, Moriguchi-shi, Osaka (JP)
(74) Representative: Glawe, Delfs, Moll & Partner

(57) **Abstract**

A full-scene storage portion (18) stores full-scene BIFS data and if a BIFS command other than Scene Replace is received from an encoder (12) a full-scene composition portion (16) composites the full-scene BIFS data stored in the full-scene storage portion (18) and the BIFS command together to generate new full-scene BIFS data and update the full-scene BIFS data stored in the full-scene storage portion (18) and periodically or if a reception system issues a transmission request the full-scene BIFS data stored in the full-scene storage portion (18) is transmitted to the reception system. Thus a scene can be displayed with high quality.

## Description

### BACKGROUND OF THE INVENTION

### Field of the Invention

The present invention relates to transmission systems, reception systems, and transmission and reception systems transmitting and/or receiving multimedia information.

### Description of the Background Art

In the moving pictures experts group (MPEG)-4 system, scene descriptions described in a scene description language binary format for scenes (BIFS) can be used to composite speeches, animated images, graphics and other similar various objects and display the same as a scene.

A scene description is described with a tree structure referred to as a scene graph, having each node with an object associated therewith. The scene graph can be dynamically updated by a BIFS command described in the scene description language BIFS. Hereinafter, data described in the BIFS including a BIFS command changing a scene graph will be referred to as BIFS data.

A scene description and an object serving as a constituent of the same description are associated with each other by an object descriptor corresponding to control information.

Object data, BIFS data and an object descriptor are each delivered from a transmitting side to a receiving side in a stream in the form of a packet, referred to as an SL packet, one at a time.

An object packet and a BIFS packet may be multiplexed together and thus transmitted in a single stream or they may be transmitted in different streams via different routes and protocols.

Typically the BIFS packet is generated non-periodically for example when scenes are switched, whereas typically the object packet is periodically generated.

Furthermore, the BIFS data, as well as a program file, is not allowed to have data missing and it must be received by a receiving side in its complete condition, whereas the object data such as a speech, an animated image and the like may have data more or less missing although it should be transmitted in real time.

As such, if the BIFS data and the object data are multiplexed together and thus transmitted in a single stream, transmitting a speech, an animated image and the like in real time is typically prioritized and they are thus transmitted according to a protocol which does not perform retransmission, e.g., user data protocol (UDP).

If a protocol does not provide retransmission, the BIFS packet can be lost. In particular, if BIFS packets are communicated by wireless they can often, successively be lost.

If a packet is transmitted according to a protocol providing retransmission (e.g., transmission control protocol (TCP)) it can be prevented from being missing, although reproduction fails to maintain the time structure of a speech, an animated image and the like and it cannot be provided smoothly or naturally.

Accordingly, separating and transmitting BIFS data and object data according to different protocols, may also be considered. For example, BIFS data is transmitted according to a protocol including retransmission whereas object data is transmitted according to a protocol excluding retransmission.

In this example, however, BIFS data can arrive later than the corresponding object data by the period of time taken for the BIFS data to be retransmitted.

In other words, the transmission system cannot be free of the possibility that BIFS data will be lost or delayed.

Missing or delayed BIFS data results in the following disadvantages:

Firstly, if BIFS data delays, the corresponding speech, animated image or the like may not be displayed or it may be delayed if it is displayed.

Secondly, in switching a scene if a contradiction is introduced into a BIFS command then data can be displayed abnormally. For example, if an animated image is being displayed with a Japanese speech corresponding thereto, switching the Japanese speech to an English speech requires a command deleting the Japanese speech from the scene and a command adding the English speech to the scene. However, if the command deleting the Japanese speech from the scene is somehow missing (or delayed) the animated image is displayed with the Japanese and the English speeches simultaneously displayed.

Furthermore in BIFS data there are a BIFS for the entirety of a scene and a BIFS command and if the BIFS command is lost an abnormal output will continue until the BIFS for the entirety of a subsequent scene is received. In particular, if a BIFS for the entirety of a scene is followed by using a large number of BIFS commands then recovery is not likely to be achieved.

### SUMMARY OF THE INVENTION

The present invention therefore contemplates a transmission system, reception system and transmission and reception system allowing a scene to be displayed with high quality.

In the present invention the reception system uses scene description information describing a scene transmitted from a transmission system and object data constituting the scene, to display the scene, and it includes a composition process portion using the scene description information to composite a corresponding the object data to display the scene, and a display control portion controlling the composition process portion to resolve an error in the scene displayed that is attributed to non-arrival of scene description information provided to describe the scene.

Preferably in controlling the composition process portion to resolve the error the display control portion supplies the composition process portion with the scene description information for resolving the error and controls the composition process portion to use the scene description information for resolving the error to resolve the error.

More preferably the display control portion includes a determination portion determining arrival/non-arrival of the scene description information, and a control portion supplying the composition process portion with default scene description information and controlling the composition process portion to use the default scene description information to execute the composition when the determination portion determines that the scene description information has not yet arrived.

Still more preferably the control portion includes a memory storing the default scene description information read according to a determination made by the determination portion.

Furthermore still more preferably, the transmission system also transmits scene control information associating the object data and the scene description information with each other, the composition process portion includes a compositor using the scene control information to composite corresponding object data, and the control portion also includes a modification portion operative in response to a determination of the determination portion to use the default scene description information to modify corresponding scene control information for output to the composition process portion.

In particular the memory stores scene description information previously received.

Preferably, the scene description information includes full-scene description information for describing a full scene and a scene description command partially changing the scene, and the display control portion includes a determination portion determining whether received scene description information has an abnormality, and a transmission requesting portion requesting the transmission system to transmit full-scene description information when the determination portion determines that received scene description information has an abnormality.

Preferably when the scene description information does not have a successive sequence number the determination portion determines that there is an abnormality.

Preferably the sequence number is a sequence number of a sink-layer packet.

Preferably the display control portion includes a check portion checking whether there is a contradiction between received scene description information and a current display, and a control portion eliminating a contradiction in a display occurring in the composition process portion when the check portion determines that the contradiction has been introduced.

Preferably the check portion includes a pass/fail determination database storing information referred to to make the determination.

Preferably the check portion refers to the information referred to to make the determination and if it is found therefrom that scene description information to be received is missing or delayed then the check portion determines that the contradiction has been introduced.

Preferably the control portion is operative in response to an output of the check portion to modify the current display.

Preferably the control portion is operative in response to an output of the check portion to modify scene description information being used for the current display.

Furthermore in the present invention the transmission system transmits scene description information including full-scene description information for describing a full scene or a scene description command for partially changing the scene, and an object data constituting the scene, and it includes: a scene description information encoding portion encoding the scene description information; an object encoding portion encoding the object data; a storage portion storing the full-scene description information; a composition portion operative in response to a predetermined scene description command received from the scene description information encoding portion, to composite full-scene description information stored in the storage portion and the predetermined scene description command together to generate and use new full-scene description information to overwrite and thus update the full-scene description information in the storage portion for storage; a multiplexing portion multiplexing together scene description information received from the scene description information encoding portion or full-scene description information received from the storage portion and object data received from the object encoding portion; and a switch portion switching an input for the multiplexing portion between the scene description information encoding portion and the storage portion.

Preferably the composition portion provides the composition only when a command other than a command instructing that a scene be entirely replaced is received.

Preferably the transmission system periodically transmits to a reception system the full-scene description information stored in the storage portion.

Preferably the transmission system receives from a reception system receiving the object data and the scene description information a request made to transmit the full-scene description information, and responsively transmits the full-scene description information to the reception system.

Furthermore in the present invention the transmission and reception system includes a transmission system transmitting scene description information for describing a scene and object data constituting the scene, and a reception system receiving the scene description information and the object data from the transmission system and using the scene description information to composite the object data to display the scene. The transmission system includes: a scene description information encoding portion encoding the scene description information; an object encoding portion encoding the object data; a storage portion storing full-scene description information for describing the scene entirely; a composition portion operative in response to a predetermined scene description command received from the scene description information encoding portion, to composite full-scene description information stored in the storage portion and the predetermined scene description command together to generate and use new full-scene description information to overwrite and thus update the full-scene description information in the storage portion for storage; a multiplexing portion multiplexing together scene description information received from the scene description information encoding portion or full-scene description information received from the storage portion and object data received from the object encoding portion; and a switch portion switching an input for the multiplexing portion between the scene description information encoding portion and the storage portion. The reception system includes a determination portion determining whether received scene description information has an abnormality, and a transmission requesting portion requesting the transmission system to transmit full-scene description information when the determination portion determines that received scene description information has an abnormality.

The foregoing and other objects, features, aspects and advantages of the present invention will become more apparent from the following detailed description of the present invention when taken in conjunction with the accompanying drawings.

### BRIEF DESCRIPTION OF THE DRAWINGS

In the drawings:
Fig. 1 is a block diagram showing a transmission and reception systems in a first embodiment of the present invention;
Fig. 2 is a schematic block diagram showing a configuration of the transmission system in the first embodiment;
Figs. 3 and 4 are views each for illustrating a function of the full-scene composition portion shown in Fig. 2;
Fig. 5 is a block diagram schematically showing a configuration of the reception system in the first embodiment;
Fig. 6 is a conceptual portion for illustrating a function of an object descriptor;
Figs. 7 and 8 are first and second flow charts, respectively, for illustrating an operation in the Fig. 1 transmission system;
Figs. 9 and 10 are first and second flow charts, respectively, for illustrating an operation of the Fig. 1 reception system;
Fig. 11 is a conceptual view showing a relationship between reception and transmission systems in a second embodiment of the present invention;
Fig. 12 is a block diagram schematically showing a configuration of the reception system in the second embodiment;
Figs. 13A and 13B are conceptual views for illustrating a function of the reception system shown in Fig. 11;
Figs. 14 and 15 are each a flow chart of acquisition of session data in the MPEG-4 system;
Fig. 16 is a flow chart representing a portion of a process to acquire session data in the Fig. 11 reception system;
Fig. 17 is a flow chart of a process provided to determine whether BIFS data has arrived in the Fig. 11 reception system;
Fig. 18 is a conceptual view representing a relationship between reception and transmission systems in a third embodiment of the present invention;
Figs. 19A and 19B are conceptual views for illustrating a function of the reception system shown in Fig. 18;
Fig. 20 is a flow chart representing a portion of a process to acquire session data in the Fig. 18 reception system;
Fig. 21 is a flow chart of a BIFS extraction process in the Fig. 18 reception system;
Figs. 22 and 23 are each a block diagram schematically showing a configuration of a main portion of the reception system in the third embodiment;
Fig. 24 is a conceptual view representing a relationship between reception and transmission systems in a fourth embodiment of the present invention;
Fig. 25 is a flow chart for illustrating a process provided to check BIFS data in the reception system shown in Fig. 24;
Fig. 26 is a block diagram schematically showing a configuration of a main portion of the reception system in the fourth embodiment;
Figs. 27 and 28 are block diagrams each schematically showing another configuration of the main portion of the reception system in the fourth embodiment; and
Fig. 29 is a conceptual view representing a function of the reception system in the fourth embodiment.

### DESCRIPTION OF THE PREFERRED EMBODIMENTS

The embodiments of the present invention will now be described more specifically with reference to the drawings. In the figures, like components are denoted by like reference characters and will not be described repeatedly.

### First Embodiment

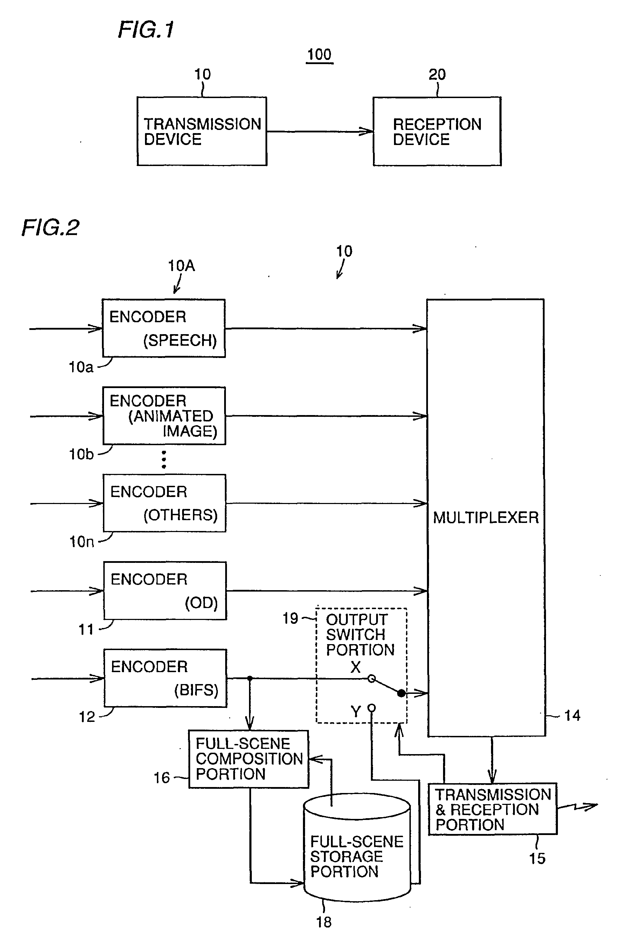

Fig. 1 is a block diagram schematically showing a system transmitting and receiving multimedia information in the MPEG-4 system. As shown in Fig. 1, a transmission and reception system 100 includes a transmission system 10 and a reception system 20.

Transmission system 10 encodes, in a predetermined system, object data such as a speech, an animated image, a still picture and computer graphics (CG), BIFS data provided for compositing object data to describe a scene, and an object descriptor associating the BIFS data and the object data with each other, and transmits them to reception system 20.

Reception system 20 receives the object data from transmission system 10 and composites the object data by using the BIFS data and the object descriptor and displays each scene.

With reference to Fig. 2, transmission system 10 includes an encoder group 10A, a multiplexer 14, a transmission and reception portion 15, a full-scene composition portion 16, a full-scene storage portion 18 and an output switch portion 19. Encoder group 10A is formed of encoders 10a, 10b, ..., 10n and encoders 11 and 12.

Encoders 10a, 10b, ..., 10n are provided for object data, such as a speech, an animated image, a still picture, CG and the like, in a one to one correspondence, and each encode different object data. For example, encoder 10a encodes a speech, encoder 10b encodes an animated image, and encoder 10n encodes the other object data. Encoder 11 encodes an object descriptor OD and encoder 12 encodes BIFS data.

Multiplexer 14 multiplexes together in a multiplexing stream format the object data encoded by and received from encoder 10a-10n, object descriptor OD encoded by and received from encoder 11 and the BIFS data encoded by and received from encoder 12 and outputs the same to transmission and reception portion 15.

Transmission and reception portion 15 transmits the data multiplexed by multiplexer 14 to reception system 20 via a public line or, as will be described hereinafter, receives a request sent from a transmission system via a public line network to transmit BIFS data and outputs the request to output switch portion 19.

Full-scene composition portion 16 composites full-scene BIFS data that is stored in full-scene storage portion 18 and a BIFS command received from encoder 12 together to generate new full-scene BIFS data, updates the full-scene BIFS data in full-scene storage portion 18 by using the new, generated full-scene BIFS data, and stores the updated BIFS data in full-scene storage portion 18.

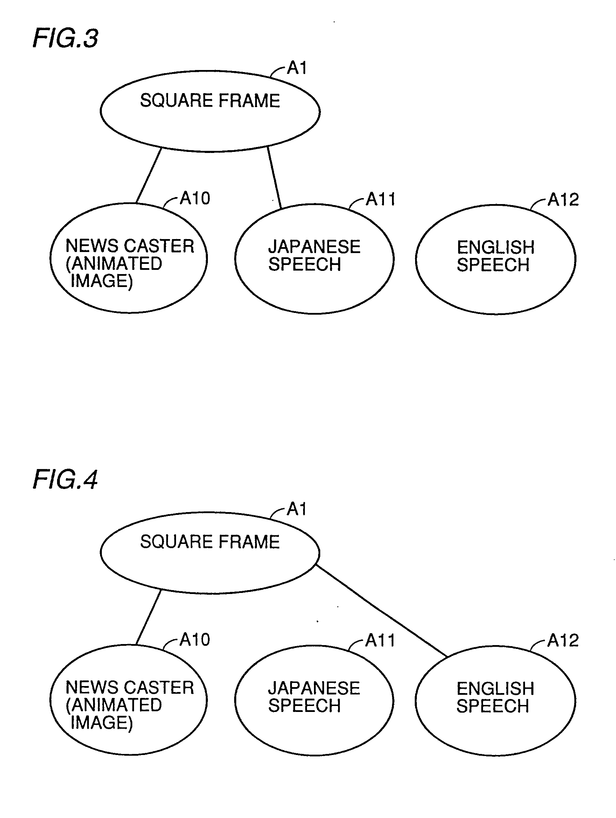

Full-scene composition portion 16 functions, as will more specifically be described hereinafter. With reference to Fig. 3, for example if a scene description currently being displayed is represented by a scene graph formed of a node A1 (a square frame), a node A10 (a news caster (an animated image)) and a node 11 (a Japanese speech), full-scene storage portion 18 stores full-scene BIFS data with the Fig. 3 node A1 and nodes A10 and All connected thereto.

Then when encoder 12 issues a BIFS command instructing that the Japanese speech be disconnected, a node 12 (an English speech) and a BIFS command instructing that the English speech be connected, full-scene composition portion 16 disconnects node All from node A1 adds node A12 and connects node 12 to node A1 (see Fig. 4). Thus, full-scene composition portion 16 composites full-scene BIFS data stored in full-scene storage portion 18 and a BIFS command received from encoder 12 together and full-scene storage portion 18 is overwritten with the new, composited full-scene BIFS command. Thus, full-scene storage portion 18 constantly stores the latest full-scene BIFS data.

Full-scene composition portion 16 provides the above-described composition only when it receives from encoder 12 a BIFS command other than Scene Replace, and full-scene composition portion 16 does not provide the above-described composition when the Scene Replace BIFS command is received from encoder 12, since the Scene Replace BIFS command instructs that previous full-scene BIFS data be replaced by new full-scene BIFS data and full-scene BIFS data having been stored in full-scene storage portion 18 can thus not be composited with a BIFS command received from encoder 12. Thus, when Scene Replace BIFS command is received, full-scene composition portion 16 overwrites full-scene storage portion 18 with full-scene BIFS data subsequently received and updates full-scene BIFS data previously stored. Note that a BIFS command other than Scene Replace includes Insertion, Deletion, and Replace.

Full-scene storage portion 18 responds to a request received from full-scene composition portion 16 by outputting stored full-scene BIFS data to full-scene composition portion 16 and also overwriting previously stored full-scene BIFS data with full-scene BIFS data output from full-scene composition portion 16 and thus storing the full-scene BIFS data received from full-scene composition portion 16.

Output switch portion 19 includes terminals X and Y and in normal operation has terminal X connected to receive BIFS data from encoder 12 and output the BIFS data to multiplexer 14 and when it receives from transmission and reception portion 15 a request for transmission it has terminal Y connected to read full-scene BIFS data from full-scene storage portion 18 and output the BIFS data to multiplexer 14. Output switch portion 19 is thus adapted to have a terminal for an input to multiplexer 14 that can be switched to prevent simultaneous transmission of a BIFS command from encoder 12 and full-scene BIFS data from full-scene storage portion 18. More specifically, a BIFS command and full-scene BIFS data are given the same time stamp, e.g., a composition time stamp (CTS), a decoding time stamp (DTS) or the like, and if they are simultaneously transmitted, confusion may be introduced on the receiving side.

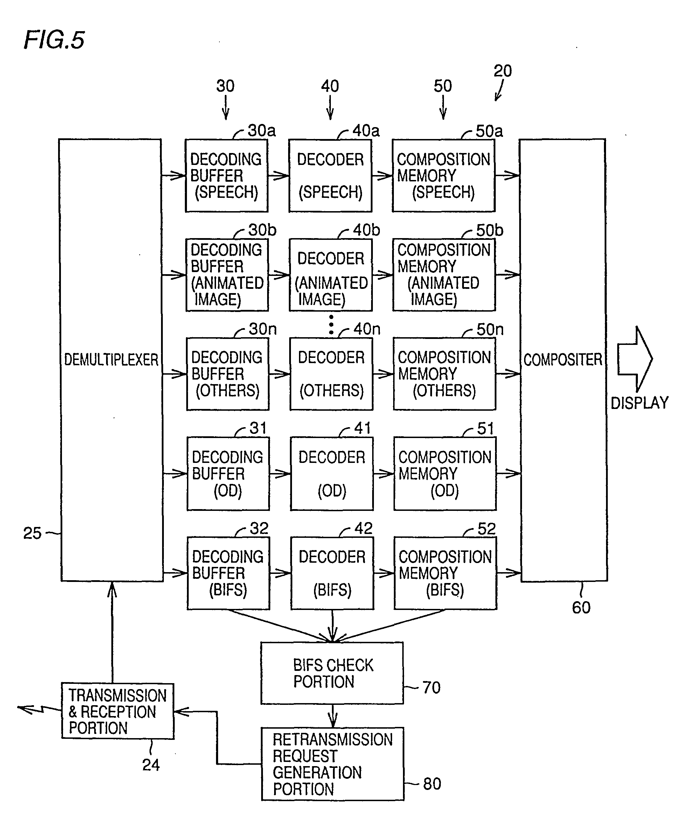

With reference to Fig. 5, reception system 20 includes a transmission and reception portion 24, a demultiplexer 25, a decoding buffer group 30, a decoder group 40, a composition memory group 50, a compositer 60, a BIFS check portion 70, and a retransmission request generation portion 80. Decoding buffer group 30 is formed of decoding buffers 30a-30n and decoding buffers 31 and 32. Decoder group 40 is formed of decoders 40a-40n and decoders 41 and 42. Composition memory group 50 is formed of composition memories 50a-50n and composition memories 51 and 52.

Transmission and reception portion 24 receives object data, BIFS data and object descriptor OD from transmission system 10 via a public line network and outputs the object data, object descriptor OD and the BIFS data to demultiplexer 25. Transmission and reception portion 24 also receives a retransmission request signal from retransmission request generation portion 80 and transmits the signal to transmission system 10 via a public line network.

Demultiplexer 25 receives object data, object descriptor OD and BIFS data from transmission and reception portion 24 and outputs them to decoding buffers 30a-30n, decoding buffer 31 and decoding buffer 32, respectively.

Decoding buffers 30a-30n are provided for object data, such as a speech, an animated image, a still picture, CG and the like, in a one to one correspondence, and each temporarily hold different object data. For example, decoding buffer 30a temporarily holds a speech and outputs it to decoder 40a, decoding buffer 30b temporarily holds an animated image and outputs it to decoder 40b and decoding buffer 30n temporarily holds the other object data and outputs it to decoder 40n. Decoding buffer 31 temporarily holds object descriptor OD and outputs it to decoder 41 and decoding buffer 32 temporarily holds BIFS data and outputs it to decoder 42.

Decoders 40a-40n are provided for object data, such as a speech, an animated image, a still picture, CG and the like, in a one to one correspondence, and each decode different object data. For example, decoder 40a decodes a speech, decoder 40b decodes an animated image and decoder 40n decodes the other object data. Decoder 41 decodes object descriptor OD and decoder 42 decodes BIFS data. Each of decoders 40a-40n and 41 and 42, with an access unit AU corresponding to an input, outputs a composition unit.

Composition memories 50a-50n hold the composition units output from their respective decoders 40a-40n. Each composition memory corresponds to one of object data. For example, composition memory 50a corresponds to a speech, composition memory 50b corresponds to an animated image, and composition memory 50n corresponds to the other object data. Composition memory 51 holds a composition unit output from decoder 41. Composition memory 52 holds a composition unit output from decoder 42.

Compositor 60 composites object data received from composition memories 50a-50n by using object descriptor OD from composition memory 51 and BIFS data from composition memory 52, to display a scene.

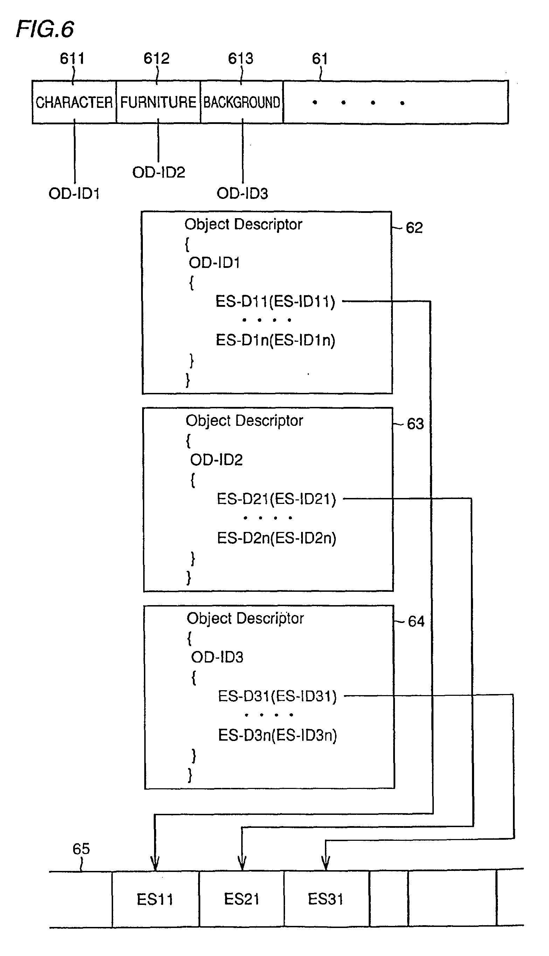

Reference will now be made to Fig. 6 to more specifically describe a function of compositor 60. Compositor 60 for example receives BIFS data 60 from composition memory 52, object descriptors 62-64 from composition memory 51, and an elementary stream 65 from composition memories 50a-50n. BIFS data 61 includes a BIFS for describing three object data corresponding to a character 611, furniture 612 and a background 613 together configuring one scene. In BIFS data 61, character 612, furniture 612 and background 613 are assigned different object descriptor identifications OD-ID1, OD-ID2 and OD-ID3, respectively.

Compositor 60 refers to object descriptor identifications OD-ID1, OD-ID2 and OD-ID3 assigned to character 611, furniture 612 and background 613, respectively, of BIFS data 61 and identify the object descriptors corresponding to character 611, furniture 612 and background 613. More specifically, compositor 60 detects object descriptor 62 with object descriptor identification OD-ID 1 as an object descriptor corresponding to character 611. Similarly, compositor 60 detects object descriptor 63 as an object descriptor corresponding to furniture 612 and object descriptor 64 as an object descriptor corresponding to background 613. In each of object descriptors 62-64 there exists an elementary-stream descriptor ES-D describing information associating the object descriptor with elementary stream ES. Elementary-Stream descriptor ES-D provides an association with stream 65 corresponding to object data. More specifically, elementary-stream descriptor ES-D includes an elementary stream identification ES-ID.

Thus, compositor 60 refers to elementary-stream descriptor ES-D11 included in object descriptor 62 and further refers to elementary stream identification ES-ID 11 included in elementary-stream descriptor ES-D 11. Thus compositor 60, referring to elementary stream identification ES-ID11, acquires elementary stream ES11 corresponding to character 611 contained in stream 65. Similarly, compositor 60 refers to elementary stream identification ES-ID21 in object descriptor 63 to acquire elementary stream ES21 corresponding to furniture 612 and refers to elementary stream identification ES-ID31 in object descriptor 64 to acquire elementary stream ES31 corresponding to background 613. Thus, acquired elementary streams ES11, ES21 and ES31 are composited together to display a single scene.

Thus, object descriptor OD associates BIFS data with an elementary stream.

Again with reference to Fig. 5 BIFS check portion 70 checks BIFS data, which is based on a composition unit output from decoder 42. More specifically, BIFS check portion 70 checks BIFS data in a method as described hereinafter, according to a sequence number of a packet (an SL packet). According to a result obtained from BIFS check portion 70, retransmission request generation portion 80 requests transmission system 10 to retransmit full-scene BIFS data. Retransmission request generation portion 80 generates data for the retransmission request and outputs the generated data for the retransmission request to transmission and reception portion 20.

The transmission and reception system configured as described above operates as will be described hereinafter. Initially, the operation of transmission system 10 will be described.

As has been described previously, encoder group 10 encodes object data such as a speech, an animated image and the like, an object descriptor, and BIFS data. More specifically, encoders 10a-10n encode the object data, encoder 11 encodes the object descriptor and encoder 12 encodes the BIFS data. Then encoders 10a-10n and 11 and 12 each output the encoded data to multiplexer 14. Note that output switch portion 19 normally has terminal X connected and the data from encoder 12 is input to multiplexer 14. Furthermore encoder 12 also outputs the encoded data to full-scene composition portion 16.

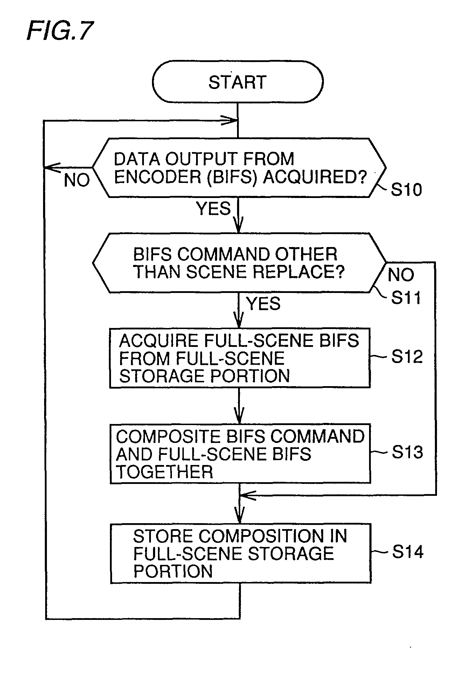

Full-scene composition portion 16 operates, as represented in Fig. 7. Full-scene composition portion 16 determines whether BIFS data has been acquired from encoder 12 (step S10). Then, full-scene composition portion 16 repeats the step S10 decision until BIFS data is acquired from encoder 12. When full-scene composition portion 16 determines that BIFS data has been acquired from encoder 12, full-scene composition portion 16 determines whether the acquired BIFS data is a BIFS command other than Scene Replace (step S11).

If the acquired BIFS data is a BIFS command other than Scene Replace then full-scene composition portion 16 composites full-scene BIFS data received from full-scene storage portion 18 and the BIFS command received from encoder 12 together to generate new, full-scene BIFS data (step S13).

For example, if full-scene BIFS data is represented by a scene graph configured of a node "a square frame" (a still picture), a node "a news caster" (an animated image) and a node "a Japanese speech" and a BIFS command is input instructing that a node "an illustration" (a CG image) be added (Insertion) then new full-scene BIFS data is generated with this new node added thereto.

Then this new full-scene BIFS data is stored in full-scene storage portion 18 (step S14), when full-scene BIFS data having been stored in full-scene storage portion 18 is overwritten and thus updated to the new full-scene BIFS data.

At step S11 when full-scene composition portion 16 determines that the Scene Replace BIFS command is received, new full-scene BIFS data is to be transmitted. Thus, full-scene BIFS data read from full-scene storage portion 18 and a BIFS command received from encoder 12 are not composited together and the new full-scene BIFS data is stored in full-scene storage portion 18. Note that if in a data stream, full-scene BIFS data is initially input, the full-scene BIFS data is of course stored intact in full-scene storage portion 18.

Thus, full-scene storage portion 18 constantly stores the latest full-scene BIFS data.

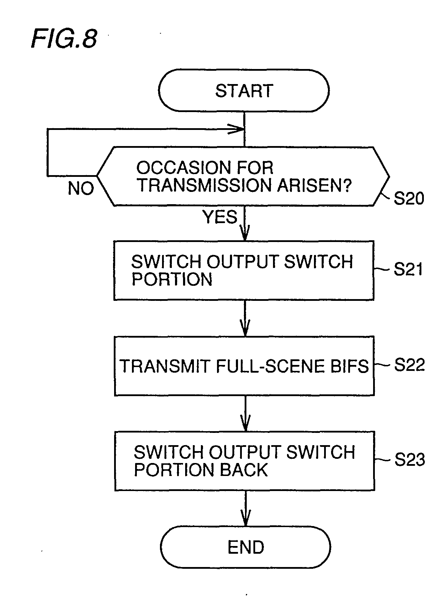

Then as shown in Fig. 8 if there occurs an occasion to transmit full-scene BIFS data stored in full-scene storage portion 18 then output switch portion 19 switches its multiplexer 14 connection to terminal Y (step S21) to output to the multiplexer 14 the full-scene BIFS data stored in full-scene storage portion 18. Multiplexer 14 multiplexes received full-scene BIFS data and each object data together and thus outputs the same to transmission and reception portion 15, which in turn transmits the full-scene BIFS data to reception system 20 (step S22). When the transmission has completed, output switch portion 19 switches its connection back to terminal X (step S23).

Full-scene BIFS data may be transmitted as described above for example if reception system 20 issues a request to transmit full-scene BIFS data, or it may be transmitted periodically whenever a predetermined period of time elapses whether reception system 20 issues such a request or not. Note that if it is transmitted regularly whenever a predetermined period of time elapses, a timer (not shown) is provided and when the timer counts a predetermined period of time f output switch portion 19 responsively switches to terminal Y to transmit full-scene BIFS data stored in full-scene storage portion 18.

Reception system 20 operates as described below: initially, its normal operation will be described including requesting transmission system 10 to transmit full-scene BIFS data.

Transmission system 10 transmits a multiplexed, media object stream, which is received by transmission and reception portion 24 and separated by demultiplexer 25 into each object data, an object descriptor and BIFS data.

Then each object data is decoded for example by decoder 40a for example via decoding buffer 30a and this decoding process generates a composition unit which is in turn stored for example in composition memory 50a.

The object descriptor is decoded by decoder 41 via decoding buffer 31 and this decoding process generates a composition unit which is in turn stored in composition memory 51.

The BIFS data is decoded by decoder 42 via decoding buffer 32 and this decoding process generates a composition unit which is in turn stored in composition memory 52.

Then compositor 60 employs the method described with reference to Fig. 6 to composite each composition unit stored in composition memory group 50 at a composition memory, to generate data for an output for example to be displayed.

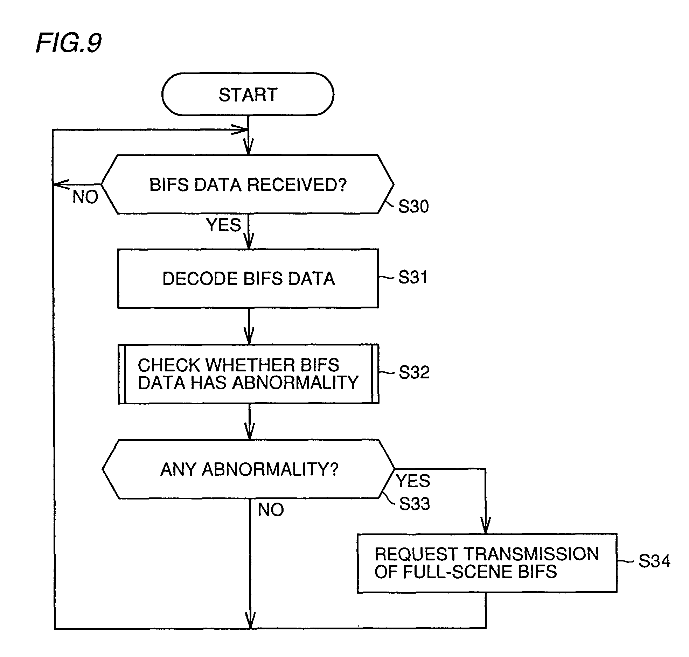

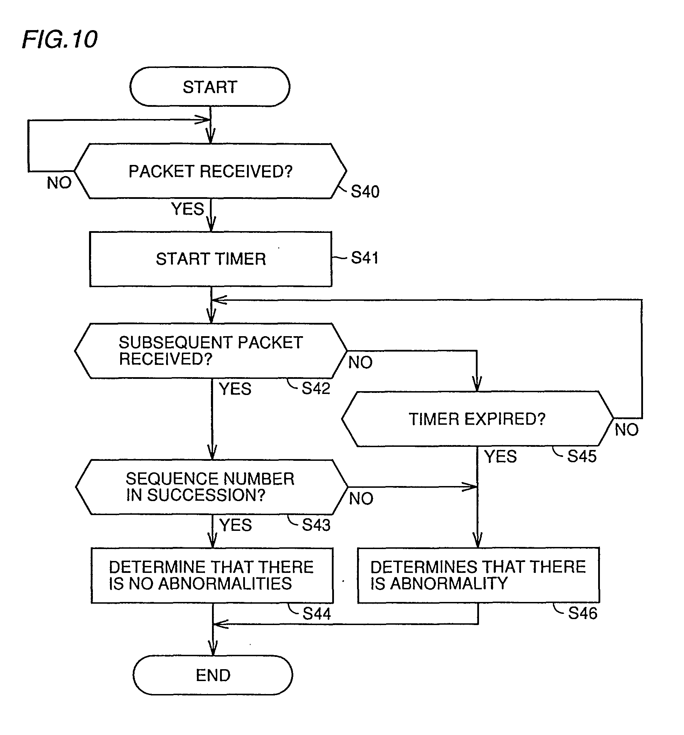

Decoder 42, BIFS check portion 70 and retransmission request generation portion 80 provide a process, as shown in Figs. 9 and 10.

With reference to Fig. 9, BIFS check portion 70 determines whether BIFS data has been received via decoding buffer 32 (step S30) and if not then step S30 is repeated. If BIFS data has been received via decoding buffer 32 then decoder 42 decodes the BIFS data (step S31). Decoder 42 then outputs a composition unit to composition memory 52.

BIFS check portion 70 uses the composition unit output from decoder 42, to check BIFS data (step S32). Step S32 is provided according to the flow chart shown in Fig. 10.

With reference to Fig. 10, BIFS check portion 70 determines from the composition unit received from decoder 42 whether a packet (an SL packet) has been received (step S40). If so, BIFS check portion 70 starts an incorporated timer (step S41).

BIFS check portion 70 then determines whether a subsequent packet has been received (step S42). If it determines that a subsequent packet has been received, BIFS check portion 70 determines whether the packet that BIFS check portion 70 determined had been received at step S40 and the packet that BIFS check portion 70 determines has been received at step S42 have their respective sequence numbers in succession (step S43). More specifically, BIFS check portion 70 determines whether an SL packet has a header including a successive packet sequence number. If so then BIFS check portion 70 determines that the BIFS data has no abnormalities (step S44).

If at step S43 BIFS check portion 70 determines that sequence numbers are not in succession that means that a packet is missing and the BIFS data contained in the missing packet is thus also missing. As such, BIFS check portion 70 determines that there is an abnormality, determining that BIFS data is missing as a transmission line has an abnormality or for a similarly reason (step S46). It also determines that there is an abnormality if a subsequent packet is not received for a predetermined period of time after the timer has been started (steps S45 and 546).

Again with reference to Fig. 9, if at step S32 BIFS check portion 70 determines that there is an abnormality then the control moves from step S33 to step S34 and BIFS check portion 70 outputs to retransmission request generation portion 80 the information indicating that there is an abnormality. Responsively, retransmission request generation portion 80 outputs a retransmission request signal to transmission and reception portion 24 to request transmission system 10 to transmit full-scene BIFS data. Transmission and reception portion 24 receives and transmits the retransmission request signal to transmission system 10 (step S34). Note that if BIFS check portion 70 determines that there is no abnormality (in the Fig. 10 at step S44) the request to transmit full-scene BIFS data, as described above, is not issued.

The issuance of a request from retransmission request generation portion 80 to transmit full-scene BIFS data serves as an occasion for transmission system 10 to transmit a full-scene BIFS and transmission system 10 transmits full-scene BIFS data stored in full-scene storage portion 18. More specifically, when reception system 20 transmits a retransmission request signal, transmission system 10 receives the retransmission request signal at transmission and reception portion 15, which in turn outputs the received restransmission request signal to output switch portion 19. Output switch portion 19 having received the retransmission request signal switches the terminal for the input for multiplexer 14 from terminal X to terminal Y to read full-scene BIFS data stored in full-scene storage portion 18 and outputs it to multiplexer 14. Multiplexer 14 multiplexes the full-scene BIFS data output from full-scene storage portion 18 and each object data together and outputs the multiplexed data to transmission and reception portion 15. Transmission and reception portion 15 transmits to reception system 20 the multiplexed data received from multiplexer 14.

Note that while in the reception system 20 operation as described above a determination is made that there is an abnormality if any packet is not received within a predetermined period of time after the timer has been started, a packet for BIFS data is not always transmitted from transmission system 10 periodically and BIFS check portion 70 may accordingly be adapted to avoid determining that there is an abnormality if any packet has not been received within the predetermined period of time, although, as shown in Fig. 10, determining as an abnormality no reception of a packet within a predetermined period of time and requesting retransmitting the packet allows the latest full-scene BIFS data to be constantly obtained.

While in the above description whether or not a packet has a successive sequence number is referred to to determine whether received BIFS data is abnormal, the present invention is not limited thereto and whether or not an access unit (AU) has a successive sequence number may be determined and if not a determination that there is an abnormality may be made.

In the transmission and reception system of the first embodiment transmission system 10 can constantly store the latest full-scene BIFS data, and transmit it to reception system 20 at regular intervals and transmit it in response to a request received from reception system 20. As such, if a fault occurs in a transmission line between transmission system 10 and reception system 20 and BIFS data such as a BIFS command is missing (or delayed), reception system 20 still can obtain the latest full-scene BIFS data and use it to output a normal scene.

### Second Embodiment

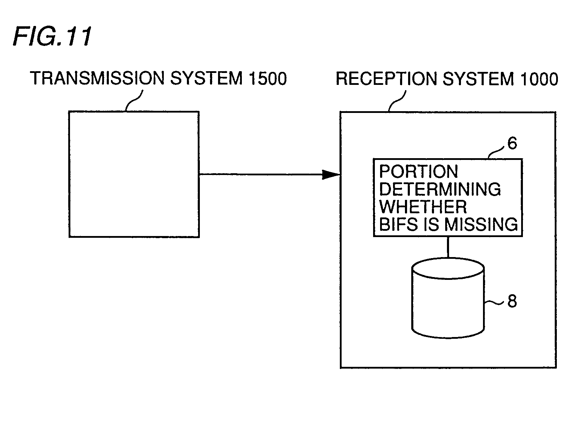

A second embodiment provides a reception system 1000 and a transmission system 1500 that have a relationship as will be described with reference to Fig. 11. Transmission system 1500 delivers to reception system 1000 object data such as a speech and an animated image, scene description data describing an object's arrangement and relationship in time (BIFS data), and object descriptor OD associating a constituent of a scene with an object. Each stream is assigned an elementary-stream identification (ES-ID) provided to identify the stream. Each stream is encoded in a respective system.

A scene description is represented by a scene graph using a scene description language BIFS. At a node referring to an object an object descriptor identification (OD-ID) is designated for identifying an object. Object descriptor OD refers to object-descriptor identification OD-ID and elementary-stream identification ES-ID to associate a scene description and an object with each other.

In the second embodiment reception system 1000 displays a scene from such encoded data. Note, however, that if a portion determining whether data is missing 6 determines that BIFS data has not yet arrived or it is missing (or delayed) then default BIFS data stored in a default-BIFS storage portion 8 is used to display a scene.

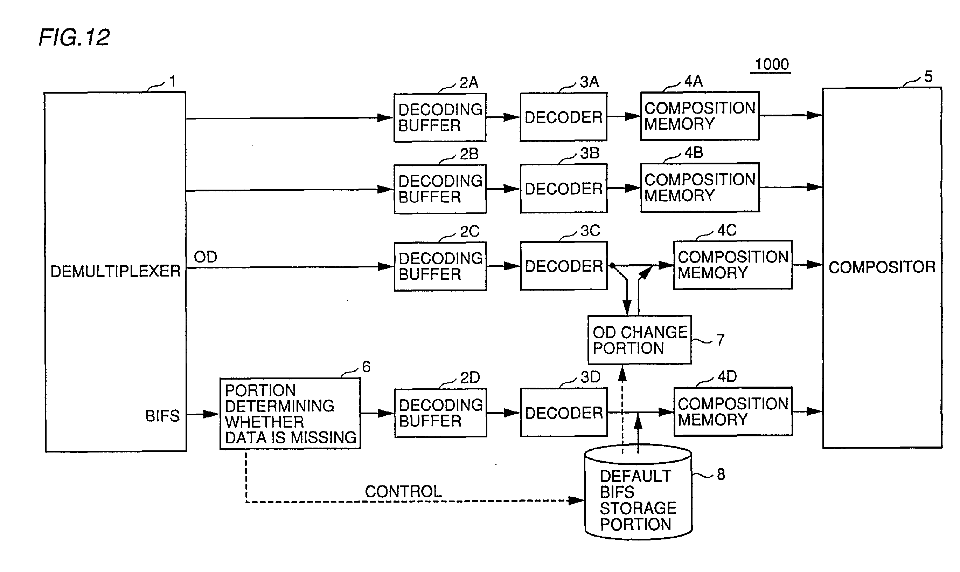

One example of reception system 1000 of the second embodiment will now be described with reference to Fig. 12. The Fig. 12 reception system 1000 system includes a demultiplexer 1 developing a multiplexed stream into individual streams, decoding buffers 2A-2D holding data output from demultiplexer 1, decoders 3A-3D decoding data of decoding buffers 2A-2D, respectively, composition memories 4A-4D holding outputs respectively output from decoders 3A-3D, respectively, and a compositor 5 compositing a composition unit CU.

Demultiplexer 1 outputs access unit AU corresponding to a processing unit for the time management for decoding and composition, synchronization and the like. Transmission system 1500 transmits access unit AU in the form of a SL packet, one at a time (or divides access unit AU into a plurality of SL packets for transmission).

The SL packet has a header with time information added thereto for synchronization management. The time information includes a decoding-time stamp DTS and a composition-time stamp CTS. Decoding-time stamp DTS is used for time management for a decoding process. Composition-time stamp CTS is used for time management for a composition process.

The SL packet's header has also a number (a packet sequence number) added thereto. The packet sequence number has a successive value for each SL packet.

Note that access unit AU can also have a successive number (AU sequence number) chronologically added thereto.

For each object there exist a decoder and a buffer, in a one to one correspondence. For example, data for an animated image is decoded by decoder 3A and speech data is decoded by decoder 3B. Furthermore, object descriptor OD is decoded by decoder 3C and BIFS data is decoded by decoder 3D.

Reception system 1000 further includes portion determining whether BIFS data is missing 6, an OD change portion 7 changing object descriptor OD, and default-BIFS storage portion 8 holding default BIFS data.

If BIFS data is missing, the portion determining whether data is missing 6 reads default BIFS data (decoded data) from default-BIFS storage portion 8 and supplies the read data to composition memory 4D.

OD change portion 7, in response to a determination made by the portion determining whether BIFS data is missing 6, changes an output of decoder 3C according to default BIFS data. Thus a correspondence is provided between elementary-stream identification ES-ID in object data and object-descriptor identification OD-ID of default BIFS data.

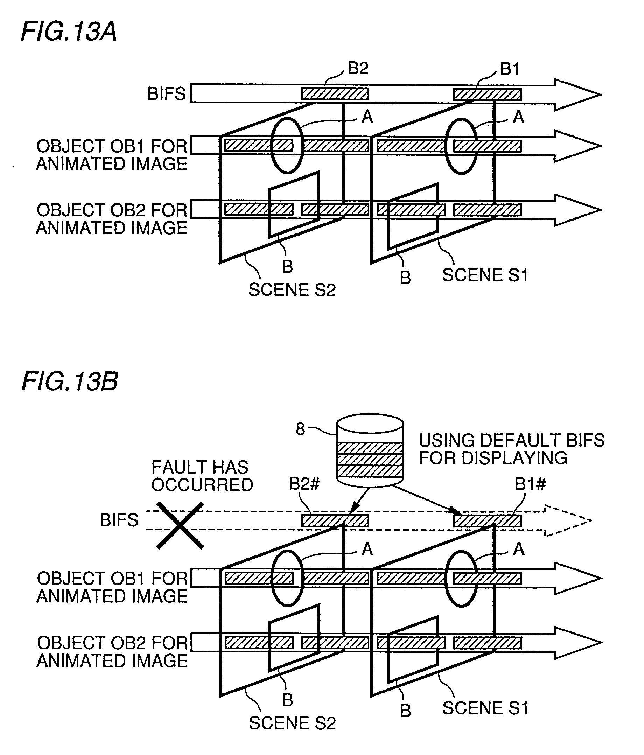

With reference to Fig. 13A, normally, BIFS data B1 is used to composite together an object CB1 for an animated image having a geometry A constituting a scene S 1 and an object OB2 for an animated image having a geometry B constituting scene S1 and thus display scene 1. BIFS data B2 is then used to composite together object OB 1 for the animated image having geometry A constituting a scene S2 and object OB2 for the animated image having geometry B constituting scene S2 and thus display scene S2.

With reference to Fig. 13, if BIFS data is missing (a fault has occurred), default BIFS data B1# stored in default-BIFS storage portion 8 is used to composite together object OB 1 for the animated image having geometry A constituting scene S 1 and object OB2 for the animated image having geometry B constituting scene S1. Then, default BIFS data B2# stored in default-BIFS storage portion 8 is used to composite together object OB1 for the animated image having geometry A constituting scene S2 and object OB2 for the animated image having geometry B constituting scene S2.

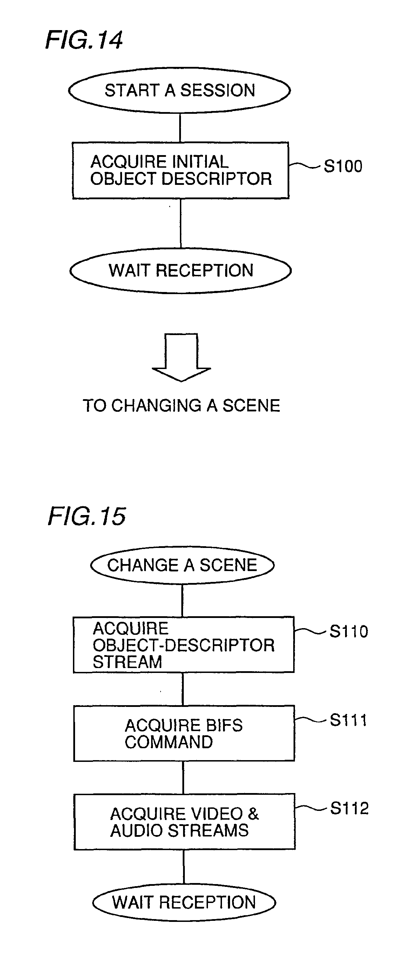

Reference will now be made to Figs. 14 and 15 to describe a flow of acquiring session data in the MPEG-4 system. Fig. 14 corresponds to a time when a session starts and Fig. 15 corresponds to a time when a scene is changed.

With reference to Fig. 14, at step S100 an initial object descriptor is acquired. Thereafter, reception is waited. Then the control moves to a process for changing a scene.

The initial object descriptor is data that is initially transmitted in a MPEG-4 session. Acquisition of the initial object descriptor reveals a setting of a header of an SL-packetized BIFS stream and that of a header of an SL-packetized object-descriptor stream.

With reference to Fig. 15, when a scene is to be changed, at step S110 an object-descriptor stream is acquired. At step S111 a BIFS command is acquired to update a constituent of a scene.

Acquisition of a BIFS stream and an object-descriptor stream reveals a scene configuration, the type and number of a stream/streams, and a setting of a header of an SL packet.

Then at step S112 a video stream and an audio stream are acquired. After all streams are acquired, reception is waited.

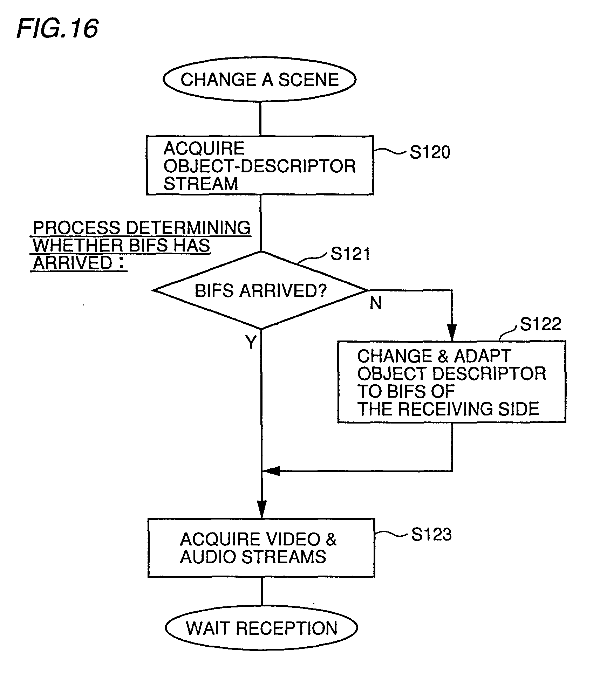

Corresponding to such a flow, reception system 1000 provides a process as shown in Fig. 16. Fig. 16 represents a flow of a process in reception system 1000 in changing a scene (including displaying an initial scene).

With reference to Fig. 16, initially at step S120 an object-descriptor stream is acquired. Subsequently at step S121 the portion determining whether data is missing 6 determines whether BIFS data has arrived, i.e., whether it is missing or not. If BIFS data is determined to have arrived (or it is not missing) then the control goes to step S123 and if BIFS data is not determined to have arrived or it is missing then the control goes to step S122.

At step S122, the portion determining whether data is missing 6 exerts control to supply composition memory 4D with default BIFS data stored in default-BIFS storage portion 8. Controlled by the portion determining whether data is missing 6, OD change portion 7 changes an object descriptor to allow it to be applied to BIFS data. The control then goes to step S123.

At step S123 a video stream and an audio stream are acquired. Reception is then waited.

As such, if BIFS data is missing then default BIFS data is used to temporarily display a scene. Thereafter when a formal BIFS data has arrived it is used to display a scene.

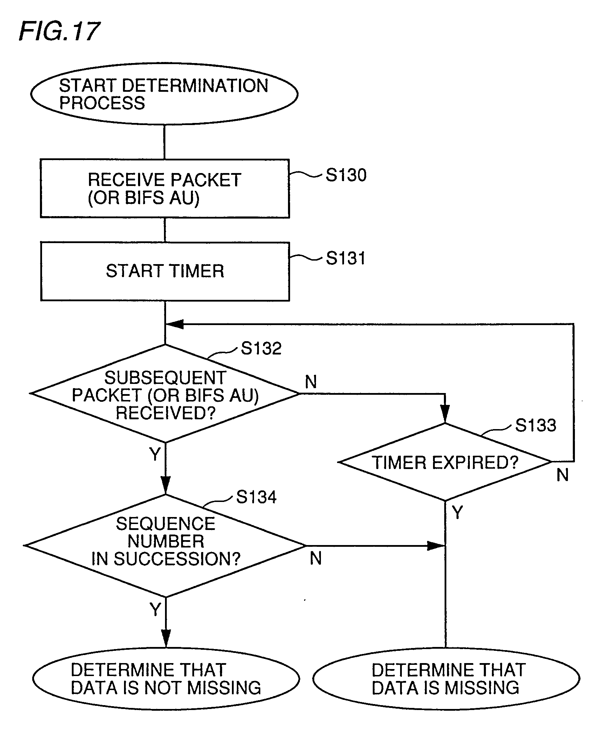

An example of a process for determining whether a BIFS has arrived will now be described with reference to Fig. 17. Initially at step S130 an SL packet (or an access unit BIFS AU corresponding to BIFS data) is received. Then at step S131 a timer included in the portion determining whether BIFS data is missing 6 is started and counts time.

At step S132 a determination is made as to whether a subsequent SL packet (or access unit BIFS AU) has been received. If not then the control goes to step S133 and if so then the control goes to step S134.

At step S133 the time counted by the timer is referred to to determine whether a predetermined period of time has elapsed since the timer was started (i.e., whether the timer has expired). If not then the control goes to step S132. If the predetermined period of time has elapsed, then a determination is made that BIFS data has not yet arrived (or it is missing).

At step S134 a determination is made as to whether two SL packets (or access units BIFS AUs) have their respective headers with their respective set packet sequence numbers (or AU sequence numbers) in succession. If so then a determination is made that BIFS data are not missing and thus successively arrive. If not then a determination is made that BIFS data has not yet arrived (or it is missing).

Thus if a subsequent BIFS data does not arrive within a predetermined period of time or sequence numbers are not in succession then a determination is made that BIFS data is missing (or delayed).

Note that if the fault-BIFS storage portion 8 is adapted to store an output of decoder 3D, BIFS data used before a missing occurs can be used as default BIFS data. This is particularly effective for a scene configuration which does not vary significantly.

In the second embodiment, as shown in Fig. 2, reception system 1000 includes default BIFS storage portion 8 holding default BIFS data. The present invention, however, is not limited thereto and if BIFS data is missing or delayed, rather than the default BIFS data held in default-BIFS storage portion 8 the BIFS data that compositors 5 immediately previously used to describe a scene may be used to describe a scene.

Furthermore, in normal operation, decoding buffer 2D outputs BIFS data to decoder 3D and also outputs BIFS data to default-BIFS storage portion 8 and stores it therein. When the portion determining whether data is missing 6 detects that BIFS data is missing (or delayed) default-BIFS storage portion 8 uses its stored BIFS data to generate BIFS data analogous to BIFS data provided for an element having already been displayed in a scene. Default-BIFS storage portion 8 then outputs the generated BIFS data to decoder 3D. Thereafter, a normal route is followed to input the BIFS data to compositors 5 and use it to display a scene.

Thus a configuration allowing BIFS data to be automatically generated may be adopted.

In the second embodiment, if BIFS data corresponding to received object data does not arrive (if it is missing or delayed), default scene description information can be used to display a scene. Thus a scene can be displayed with high quality, without failing to display a corresponding object, delaying displaying the same, or displaying a content with contradiction.

### Third Embodiment

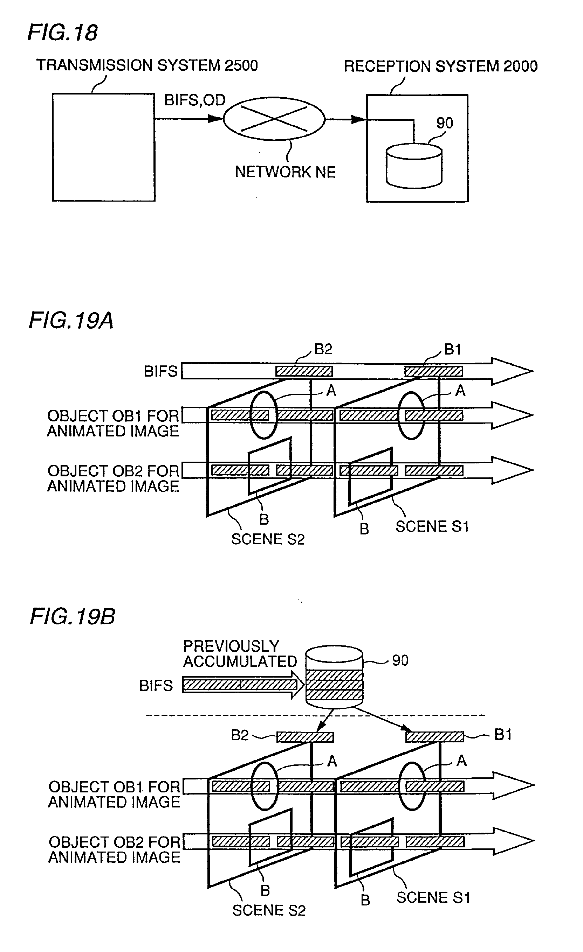

A third embodiment provides a multimedia system, as described with reference to Figs. 18 and 19. In the third embodiment, as shown in Fig. 18, a reception system (a receiving side) 2000 is provided with a memory 90 for accumulating BIFS data and object descriptors. If movie software or the like is used to display a cumulative medium, a transmission system (a transmitting side) 2500 initially transmits a BIFS stream and an object-descriptor stream via a network NE. These data transmitted are accumulated in memory 90. Thereafter transmission system 2500 transmits an object stream.

With reference to Fig. 19A, if the reception system is of a typical MPEG-4 system, BIFS data B 1 transmitted simultaneously with an object is used to composite together object OB1 for the animated image having geometry A constituting scene S1 and object OB2 for the animated image having geometry B constituting scene S1. Similarly, BIFS data B2 is used to composite together object OB1 for an animated image having geometry A constituting scene S2 and object OB2 for the animated image having geometry B constituting scene S2.

Correspondingly, reception system 2000, as shown in Fig. 19B, initially accumulates BIFS data in memory 90, and then provides a composition of received objects OB 1 and OB2 for animated images that is based on the corresponding BIFS data extracted from memory 90, and displays scene S1. Object data and BIFS data are synchronized with each other, based on a time stamp (decoding-time stamp DTS and composition-time stamp CTS).

Similarly for scene S2 received objects OB1 and OB2 for animated images are composited together based on the corresponding BIFS data extracted from memory 90.

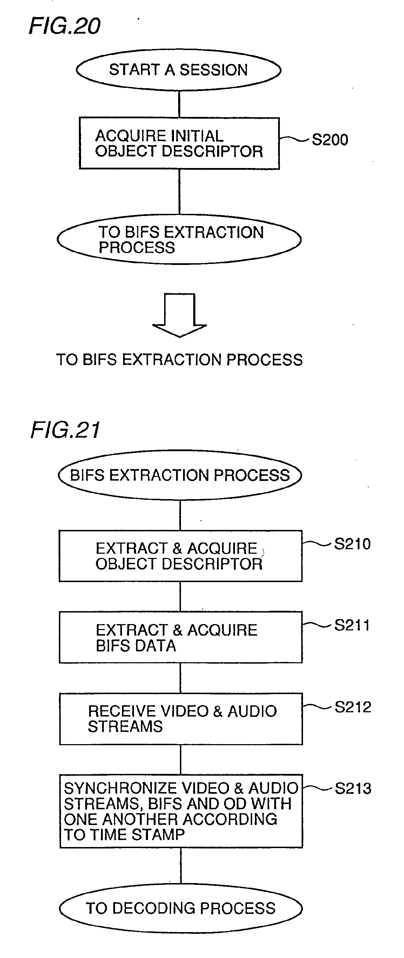

Reference will now be made to Figs. 20 and 21 to describe a flow of acquiring session data in reception system 2000. Fig. 20 represents a process when a session starts and Fig. 21 represents a process for extracting a BIFS, both by way of example.

With reference to Fig. 20, initially at step S200 an initial object descriptor is acquired. Thereafter the control moves to the Fig. 20 BIFS extraction process.

With reference to Fig. 21, initially at step S210 an object-descriptor stream is extracted from memory 90 and thus acquired. Then at step S211 BIFS data is extracted and thus acquired.

Data stored in memory 90 are extracted according to a time stamp successively as an initial object descriptor arrives. Arrival of corresponding object data is waited.

Then at step S212 a video stream and an audio stream are acquired.

When an object data has arrived the control moves to step S213.

Step S213 provides an association between data that is required for displaying a scene. More specifically, object descriptor OD, BIFS data, and object data that has arrived (and other object data to be required) are synchronized with one another according to a time stamp. After step S213 the control goes to a decoding process.

To achieve the synchronization according to a time stamp, the time stamp is attached to an SL packet in transmission system 2500 according to a predetermined rule. For example, "the video, audio, BIFS and object descriptor OD that are to be initially decoded have the same time stamp" and from this information a common origin of time axes is determined and a correspondence between video, audio, BIFS and object descriptor OD are thus uniquely determined.

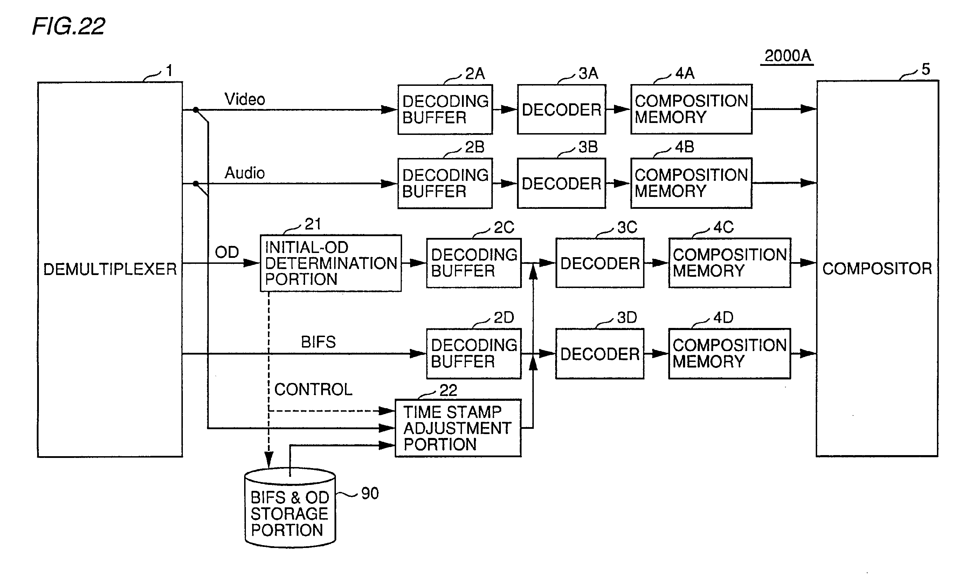

Reference will now be made to Fig. 22 to describe one example of reception system 2000 in the second embodiment. A reception system 2000A shown in Fig. 22 includes demultiplexer 1, decoding buffers 2A-2D, decoders 3A-3D, composition memories 4A-4D, compositor 5, a memory 90 accumulating BIFS data and object descriptor OD (a BIFS and OD accumulation portion 90), an initial-OD determination portion 21 determining an initial object descriptor, and a time stamp adjustment portion 22.

Initial-OD determination portion 21 determines whether an initial object descriptor has arrived. If an initial object descriptor has arrived then data accumulated in BIFS and OD accumulation portion 90 are successively extracted according to a time stamp. The extracted data are successively output to time stamp adjustment portion 22.

Time stamp adjustment portion 22 refers to a time stamp of an object (video and audio) output from demultiplexer 1, to output BIFS data and object descriptor OD that have the same time stamp, which are in turn received by decoders 3C and 3D, respectively. Thus an object is composited according to the time stamp.

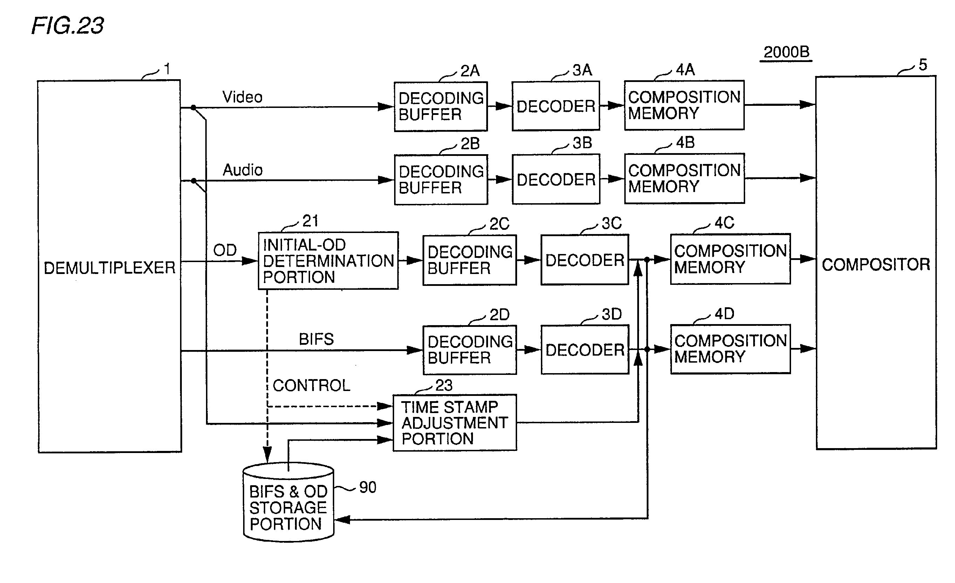

Reference will now be made to Fig. 23 to describe another example of reception system 2000 in the third embodiment. A reception system 2000B shown in Fig. 23 includes demultiplexer 1, decoding buffers 2A-2D, decoders 3A-3D, composition memories 4A-4D, compositor 5, BIFS and OD accumulation portion 90, initial-OD determination portion 21, and a time stamp adjustment portion 23.

In reception system 2000B BIFS data and object descriptor OD that are initially transmitted are decoded by decoders 3C and 3D, respectively, and a result of the decoding is accumulated in BIFS and OD accumulation portion 90.

Controlled by initial-OD determination portion 21, data accumulated in BIFS and OD accumulation portion 90 are extracted successively according to a time stamp and thus output to time stamp adjustment portion 23.

Time stamp adjustment portion 23 refers to a time stamp of an object (video and audio) output from demultiplexer 1, to output BIFS data and object descriptor OD that have the same time stamp, which are in turn received by composition memories 4C and 4D, respectively. Thus an object is composited according to the time stamp.

Reception systems 2000A and 2000B both communicate BIFS data and an object descriptor according to a protocol that has a retransmission function such as TCP and is thus highly reliable (i.e., free from missing data). Using such a highly reliable protocol can eliminate the problem of missing and delayed BIFS data. Furthermore, these data that are transmitted are simply stored rather than used in a composition process and it is thus not disadvantageous if a network is delayed.

### Fourth Embodiment

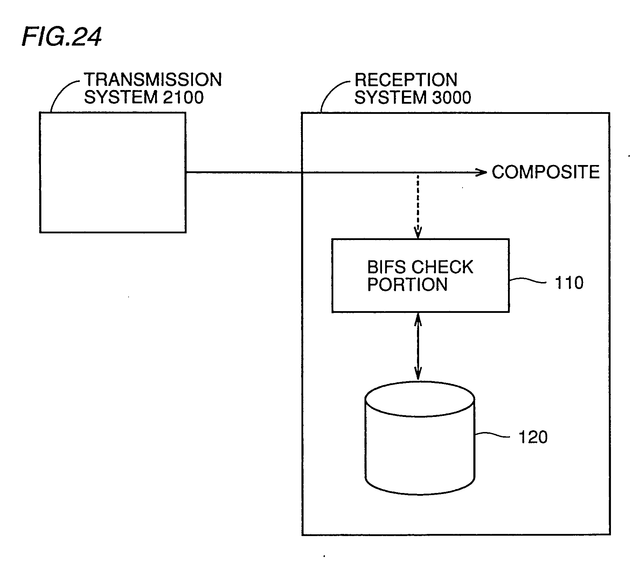

A fourth embodiment provides a reception system (a receiving side) 3000 and a transmission system (a transmitting side) 2100 outlined with reference to Fig. 24. Transmission system 2100 delivers to reception system 3000 object data for a speech, an animated image and the like, scene description data describing an object's arrangement and relationship in time (BIFS data) and object descriptor OD associating a constituent of a scene with an object. Transmission system 2100 delivers the data and object descriptor OD to reception system 3000 in a stream. These data have a time stamp added thereto for time management. Each stream is decoded in a respective system.

As has been described previously, a scene description is represented by a scene graph employing a scene description language BIFS.

Reception system 3000 has a BIFS check portion 110 checking BIFS data and a pass/fail determination database 120. Reception system 3000 determines whether there is a contradiction between scene descriptions that is attributed to missing (or delayed) BIFS data and reception system 3000 accordingly provides a process to reduce a contradiction in a content for display.

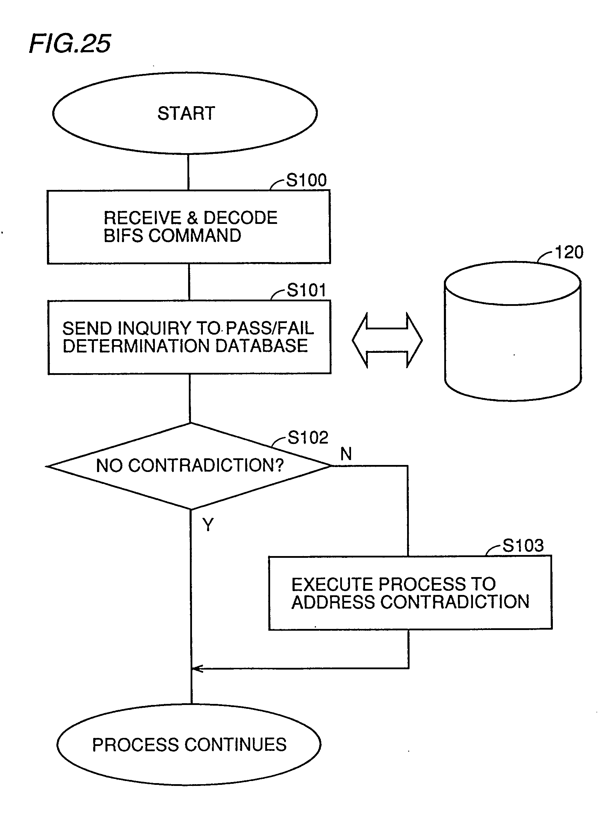

Reception system 3000 has a function to check BIFS data, as described with reference to Fig. 25. With reference to the figure, initially at step S1000 BIFS command is received and decoded.

At step S101 pass/fail determination database 120 receives an inquiry. At step S102 reference information for determination contained in pass/fail determination database 120 is referred to to examine whether a BIFS command has a contradiction (i.e., whether a scene description required is missing between a scene description being displayed and the BIFS command of interest). If so then at step S103 a process addressing the contradiction is executed. If not or the step S103 process completes then a subsequent process follows.

As the process addressing and thus reducing a contradiction in displaying (step S103), when a contradiction is introduced the scene description with the detected contradiction (that is to be composited and displayed) may be discarded, which will be referred to as a "process A" hereinafter for the sake of convenience, or a scene description being displayed and also contradicting a scene description to be composited may be modified, which will be referred to as a "process B" hereinafter for the sake of convenience.

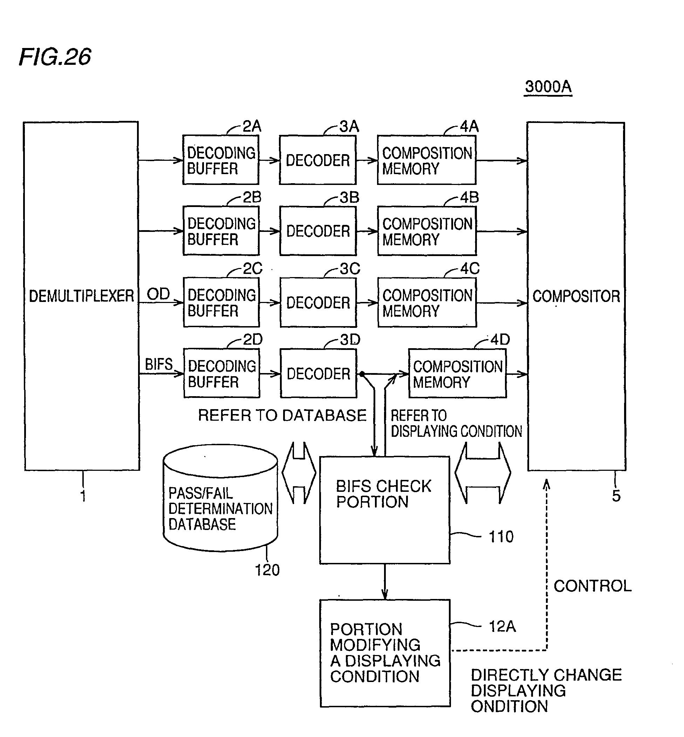

A description will now be made of a reception system having a function to modify an exact, displayed content to provide the post priority addressing process. A reception system 3000A shown in Fig. 26 includes demultiplexer 1 receiving a multiplexed stream and developing it into individual streams, decoding buffers 2A-2D holding data output from demultiplexer 1, decoders 3A-3D decoding data of decoding buffers 2A-2D, respectively, composition memories 4A-4D holding outputs of decoders 3A-3D, respectively, and compositors 5 compositing composition unit CU for displaying a scene.

Demultiplexer 1 outputs access unit AU serving as a processing unit for time management for decoding and composition, synchronization and the like. Transmission system 2100 transmits access unit AU in the form of an SL packet, one at a time (or divides access unit AU into a plurality of SL packets for transmission).

For each object there exist a decoder and a buffer, in a one to one correspondence. For example, data for an animated image is decoded by decoder 3A and speech data is decoded by decoder 3B. Furthermore, object descriptor OD is decoded by decoder 3C and BIFS data is decoded by decoder 3D.

Reception system 3000 also includes BIFS check portion 110 checking BIFS data, pass/fail determination database 120 storing reference information for determination that BIFS check portion 110 uses to make a pass/fail determination, and a portion 12A modifying a displaying condition, modifying an exact content displayed.

BIFS check portion 110 refers to a displaying condition in compositor 5 to check an output of decoder 3D, which will be referred to as scene description B1. More specifically, pass/fail determination database 120 is referred to to determine whether there is a contradiction introduced between scene description B0 being displayed and scene description B1 received.

If a determination is made that there is a contradiction introduced that is attributed to missing or delayed BIFS data, the portion 12A modifying a displaying condition provides a process to change a content in compositor 5 that is currently displayed. More specifically, it directly modifies data contained in compositor 5 or being developed on a memory contained in a terminal connected to compositor 5. Thus, a scene can be changed without contradiction.

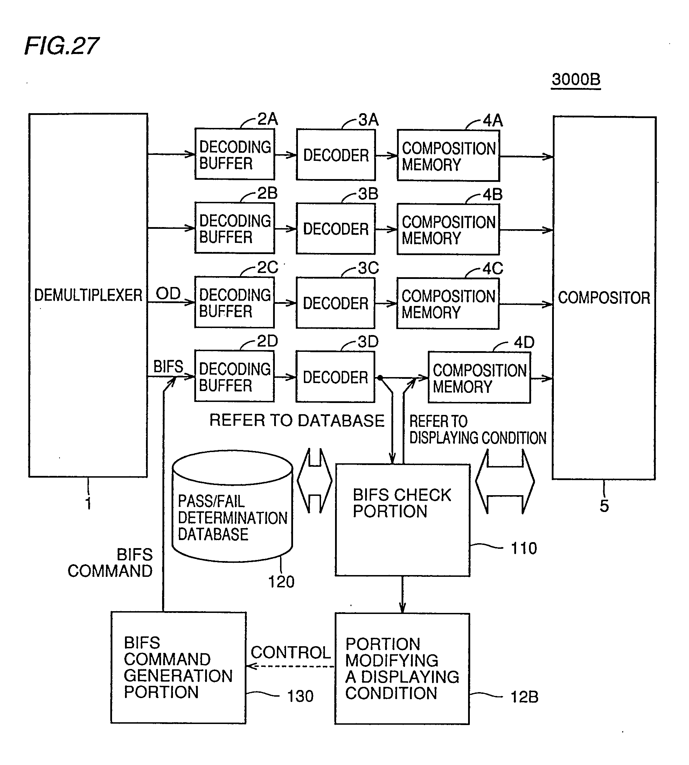

The fourth embodiment provides another exemplary reception system, as described with reference to Fig. 27. A reception system 3000B shown in Fig. 27 provides process B, functioning to internally produce a BIFS command for modifying a scene description being displayed.

Reception system 3000B includes demultiplexer 1, decoding buffers 2A-2D, decoders 3A-3D, composition memories 4A-4D, compositor 5, BIFS check portion 110, pass/fail determination database 12, a portion 12B modifying a displaying condition, and a BIFS command generation portion 130.

As has been described above, BIFS check portion 110 refers to pass/fail determination database 120 to determine whether there is a contradiction introduced between scene description B0 being displayed and scene description B1 received. If BIFS check portion 110 determines that there is a contradiction in BIFS data then the portion 12B modifying a displaying condition instructs BIFS command generation portion 130 to generate a command for changing the current displaying condition.

Controlled by the portion 12B modifying a displaying condition, BIFS command generation portion 130 generates a BIFS command for changing a scene description. Thus a BIFS command required for modifying the current displaying condition is generated.

BIFS command generation portion 130 provides an output which is in turn fed to decoding buffer 2D, follows the same route as BIFS data received from the transmitting side, and it is processed. According to the BIFS command generated a scene graph indicating a current display is changed. If the generated BIFS command and the corresponding object data need to be associated with each other, object descriptor OD is updated according to the BIFS command internally generated. Thus, a scene being displayed is modified according to the internally generated BIFS command.

After the modification, a scene is displayed based on scene description B1 having been checked by BIFS check portion 110. Thus a scene can be changed without contradiction.

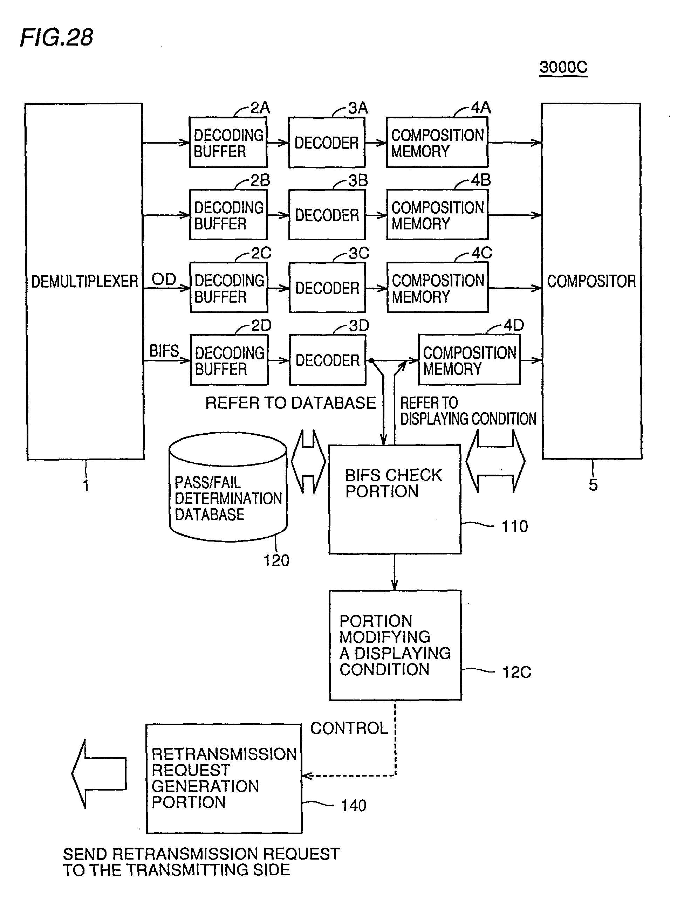

The fourth embodiment provides still another example of the reception system, as described with reference to Fig. 28. A reception system 3000C shown in Fig. 28 provides process B, functioning to request transmission system 2100 to retransmit a BIFS command.

Reception system 3000C includes demultiplexer 1, decoding buffers 2A-2D, decoders 3A-3D, composition memories 4A-4D, compositor 5, BIFS check portion 110, pass/fail determination database 120, a portion 12C modifying a displaying condition, and a retransmission request generation portion 140.

As has been described above, BIFS check portion 110 refers to pass/fail determination database 120 to determine whether there is a contradiction introduced between scene description B0 being displayed and scene description B 1 received. If there is a contradiction in BIFS data, the portion 12C modifying a displaying condition instructs retransmission request generation portion 140 to request retransmitting a BIFS command.

Controlled by the portion 12C modifying a displaying condition, retransmission request generation portion 140 generates data for requesting transmission system 2100 to retransmit a BIFS command (i.e., a retransmission request). If the missing BIFS command of interest can be specified, retransmission request generation portion 140 requests transmission system 2100 to retransmit the exact missing command. If the missing BIFS command cannot be specified, then retransmission request generation portion 140 requests transmission system 2100 to go back in time, as appropriate, to retransmit previous BIFS data. In response to the retransmission request, transmission system 2100 transmits BIFS data.

Thus the fourth embodiment provides a reception system capable of reducing a contradiction in a display if there is a contradiction introduced between a scene being displayed and a scene description to be displayed, i.e., if BIFS data is missing (or delayed).

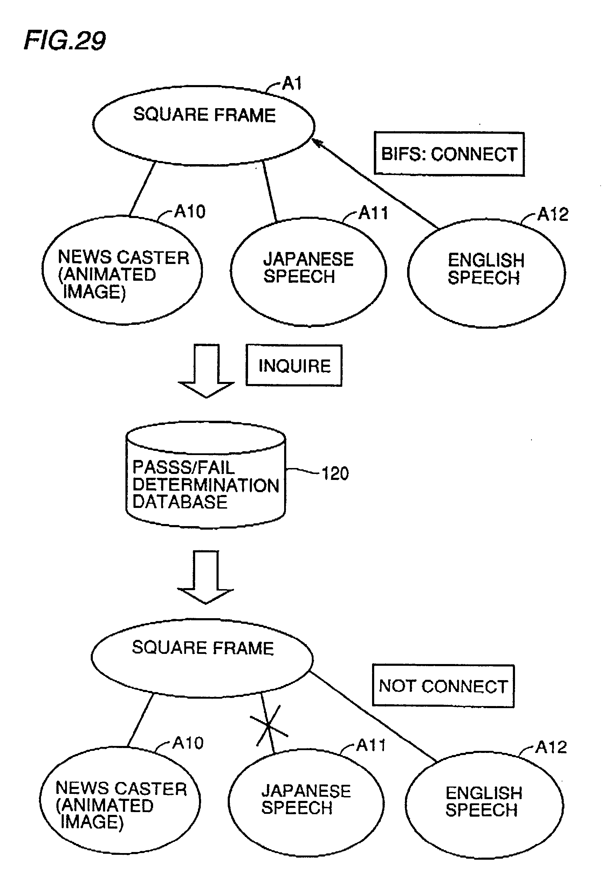

A specific example thereof is shown in Fig. 29. In the figure, by way of example, scene description B0 currently being displayed is represented by a scene graph formed of a node A1 (a "square frame"), a node A10 (a "news caster (an animated image)") and a node All (a "Japanese speech"), and a subsequent BIFS data is a BIFS command instructing that a node A12 (an "English speech") be connected to node A1.

If the reception system does not have a BIFS check function then a new scene description B1 is represented by a scene graph formed of node A1, node A10, node A11 ("Japanese speech") and node A12 ("English speech").

In contrast the reception system of the fourth embodiment sends an inquiry to pass/fail decision database 120 when BIFS data has arrived.

In response to the inquiry, a determination is for example made that if the "English speech" is connected a command deleting the "Japanese speech" is required, i.e., there is a contradiction introduced between scene descriptions and a BIFS command deleting the "Japanese speech" should be required.

When such a BIFS command has been detected to be missing, reception system 3000A directly modifies the Japanese speech current displayed.

Reception system 3000B internally generates a BIFS command to disconnect node A11 from node A1.

Reception system 3000C requests retransmission of a BIFS command for disconnecting node A11 from node A1.

Thus a Japanese speech currently displayed is terminated and it is switched to an English speech. Thus an output through the English speech is provided.

Although the present invention has been described and illustrated in detail, it is clearly understood that the same is by way of illustration and example only and is not to be taken by way of limitation, the spirit and scope of the present invention being limited only by the terms of the appended claims.

## Claims

1. Reception system (20, 1000, 1000A, 1000B, 1000C, 3000, 3000A, 3000B, 3000C) using scene description information describing a scene transmitted from a transmission system (10, 1500, 2000, 2500) and object data constituting said scene, to display said scene, comprising:
a composition process portion (5, 4A-4D, 60, 50a-50n, 51, 52) using said scene description information to composite a corresponding said object data to display said scene; and
a display control portion (6, 8, 12A, 22, 70, 80, 90, 110, 120) controlling said composition process portion to resolve an error in said scene displayed attributed to non-arrival of scene description information provided to describe said scene.

2. The reception system of claim 1, wherein in controlling said composition process portion (5, 4A-4D, 60, 50a-50n, 51, 52) to resolve said error said display control portion (6, 8, 12A, 22, 70, 80, 90, 110, 120) supplies said composition process portion (5, 4A-4D, 60, 50a-50n, 51, 52) with said scene description information for resolving said error and controls said composition process portion (5, 4A-4D, 60, 50a-50n, 51, 52) to use said scene description information for resolving said error to resolve said error.

3. The reception system of claim 2, wherein said display control portion (6, 8, 12A, 22, 70, 80, 90, 110, 120) includes:
a determination portion (6) determining arrival/non-arrival of said scene description information; and
a control portion (6) supplying said composition process portion (5, 4A-4D, 60, 50a-50n, 51, 52) with default scene description information and controlling said composition process portion (5, 4A-4D, 60, 50a-50n, 51, 52) to use said default scene description information to execute said composition when said determination portion (6) determines that said scene description information has not yet arrived.

4. The reception system of claim 3, wherein said control portion (6) includes a memory (8) storing said default scene description information read according to a determination made by said determination portion (6).

5. The reception system of claim 4, wherein:
said transmission system also transmits scene control information associating said object data and said scene description information with each other;
said composition process portion includes a compositor (5) using said scene control information to composite corresponding said object data; and
said control portion (6) also includes a modification portion (7) operative in response to a determination of said determination portion to use said default scene description information to modify corresponding said scene control information for output to said composition process portion (5, 4A-4D, 60, 50a-50n, 51, 52).

6. The reception system of claim 4, wherein said memory (8) stores said scene description information previously received.

7. The reception system of claim 2, said scene description information including full-scene description information for describing a full scene and a scene description command partially changing said scene, wherein said display control portion (6, 8, 12A, 22, 70, 80, 90, 110, 120) includes:
a determination portion (70) determining whether received scene description information has an abnormality; and
a transmission requesting portion (80) requesting said transmission system to transmit full-scene description information when said determination portion (70) determines that received scene description information has an abnormality.

8. The reception system of claim 7, wherein when said scene description information does not have a successive sequence number said determination portion (70) determines that there is an abnormality.

9. The reception system of claim 8, wherein said sequence number is a sequence number of a sink-layer packet.

10. The reception system of claim 1, wherein said display control portion (6, 8, 12A, 22, 70, 80, 90, 110, 120) includes:
a check portion (110, 120) checking whether there is a contradiction between received scene description information and a current display; and
a control portion (12A-12C) eliminating a contradiction in a display occurring in said composition process portion (5, 4A-4D, 60, 50a-50n, 51, 52) when said check portion (110, 120) determines that said contradiction has been introduced.

11. The reception system of claim 10, wherein said check portion (110, 120) includes a pass/fail determination database (120) storing information referred to to make said determination.

12. The reception system of claim 11, wherein said check portion (110, 120) refers to said information referred to to make said determination and if it is found therefrom that scene description information to be received is missing or delayed then said check portion (110, 120) determines that said contradiction has been introduced.

13. The reception system of claim 12, wherein said control portion (12A-12C) is operative in response to an output of said check portion (110, 120) to modify said current display.

14. The reception system of claim 10, wherein said control portion (12A-12C) is operative in response to an output of said check portion (110, 120) to modify scene description information being used for said current display.

15. A transmission system transmitting scene description information including one of full-scene description information for describing a full scene and a scene description command for partially changing said scene, and an object data constituting said scene, said transmission system comprising:
a scene description information encoding portion (12) encoding said scene description information;
an object encoding portion (10a-10n) encoding said object data;
a storage portion (18) storing said full-scene description information;
a composition portion (16) operative in response to a predetermined scene description command received from said scene description information encoding portion (12), to composite full-scene description information stored in said storage portion (18) and said predetermined scene description command together to generate and use new full-scene description information to overwrite and thus update said full-scene description information in said storage portion (18) for storage;
a multiplexing portion (14) multiplexing together scene description information received from said scene description information encoding portion (12) or full-scene description information received from said storage portion (18) and object data received from said object encoding portion (10a-10n); and
a switch portion (19) switching an input for said multiplexing portion (14) between said scene description information encoding portion (12) and said storage portion (18).

16. The transmission system of claim 15, wherein said composition portion (16) provides said composition only when a command other than a command instructing that a scene be entirely replaced is received.

17. The transmission system of claim 15, periodically transmitting to a reception system said full-scene description information stored in said storage portion.

18. The transmission system of claim 15, receiving from a reception system receiving said object data and said scene description information a request made to transmit said full-scene description information, and responsively transmitting said full-scene description information to said reception system.

19. A transmission and reception system comprising a transmission system transmitting scene description information for describing a scene and object data constituting said scene, and a reception system receiving said scene description information and said object data from said transmission system and using said scene description information to composite said object data to display said scene, wherein:
said transmission system includes
a scene description information encoding portion (12) encoding said scene description information,
an object encoding portion (10a-10n) encoding said object data,
a storage portion (18) storing full-scene description information for describing said scene entirely,
a composition portion (16) operative in response to a predetermined scene description command received from said scene description information encoding portion (12), to composite full-scene description information stored in said storage portion (18) and said predetermined scene description command together to generate and use new full-scene description information to overwrite and thus update said full-scene description information in said storage portion (18) for storage,
a multiplexing portion (14) multiplexing together scene description information received from said scene description information encoding portion (12) or full-scene description information received from said storage portion (18) and object data received from said object encoding portion (10a-10n), and
a switch portion (19) switching an input for said multiplexing portion (14) between said scene description information encoding portion (12) and said storage portion (18); and
said reception system includes
a determination portion (70) determining whether received scene description information has an abnormality, and
a transmission requesting portion (80) requesting said transmission system to transmit full-scene description information when said determination portion (70) determines that received scene description information has an abnormality.
